(19) Europäisches Patentamt / European Patent Office / Office européen des brevets

(11) **EP 4 223 723 A1**

(12) **EUROPEAN PATENT APPLICATION**
published in accordance with Art. 153(4) EPC

(43) Date of publication:
**09.08.2023   Bulletin 2023/32**

(21) Application number: **21875649.2**

(22) Date of filing: **28.09.2021**

(51) International Patent Classification (IPC):
*C04B 35/486* (2006.01)          *A61C 5/70* (2017.01)
*A61C 13/083* (2006.01)

(52) Cooperative Patent Classification (CPC):
**A61C 5/70; A61C 13/083; C04B 35/486**

(86) International application number:
**PCT/JP2021/035718**

(87) International publication number:
**WO 2022/071348 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020   JP 2020164151**

(71) Applicant: **Kuraray Noritake Dental Inc.**
**Kurashiki-shi, Okayama 710-0801 (JP)**

(72) Inventors:
• **NAKANO, Kirihiro**
**Miyoshi-shi, Aichi 470-0293 (JP)**
• **SAKAI, Kazuya**
**Miyoshi-shi, Aichi 470-0293 (JP)**
• **KASHIKI, Nobusuke**
**Miyoshi-shi, Aichi 470-0293 (JP)**
• **ITO, Sho**
**Miyoshi-shi, Aichi 470-0293 (JP)**
• **MATSUMOTO, Atsushi**
**Miyoshi-shi, Aichi 470-0293 (JP)**
• **ITO, Yoshihisa**
**Miyoshi-shi, Aichi 470-0293 (JP)**

(74) Representative: **D Young & Co LLP**
**120 Holborn**
**London EC1N 2DY (GB)**

(54) **ZIRCONIA CALCINED BODY HAVING EXCELLENT MACHINABILITY**

(57)   The present invention provides a zirconia pre-sintered body having excellent machinability and having a low probability of pillar fracture or chipping during milling. A method of production of such a zirconia pre-sintered body is also provided. The present invention relates to a zirconia pre-sintered body comprising zirconia, and a stabilizer capable of reducing a phase transformation of zirconia, the content of the stabilizer being 3 to 8 mol% relative to the total mole of the zirconia and the stabilizer, at least a part of the stabilizer being not dissolved in zirconia as a solid solution, and the zirconia pre-sintered body having a Vickers hardness of 65 to 135HV 5/30 as measured in compliance with JIS Z 2244:2009.

FIG.4

**Description**

TECHNICAL FIELD

The present invention relates to a zirconia pre-sintered body having good machinability, and to a method of production thereof.

BACKGROUND ART

Zirconia can undergo a phase transformation between crystal phases with a stabilizer, and exhibits high mechanical strength and translucency. This makes zirconia suitable for use as dental material. However, a zirconia sintered body formed by sintering zirconia particles (powder) has high strength and high toughness, and cannot be directly machined into a desired shape with ease.

In a common procedure performed against this backdrop, a molded body of zirconia powder that has been shaped into a disc, cuboidal, or other shape is fired (hereinafter, "pre-sintered") in a temperature region that does not sinter the zirconia powder, and the resultant pre-sintered body of a shape such as a disc is formed into a machined workpiece in roughly the same shape as the desired shape, which may be a copy of a whole tooth or a part of tooth, using a process such as cutting and machining. The machined workpiece can then be fired at the sintering temperature or higher temperature to obtain a zirconia sintered body of the desired shape.

In view of aesthetics, the zirconia sintered body is typically polished to produce a smooth surface. However, polishing after sintering is highly laborious when the surface smoothness before sintering is poor because of chipping occurring in the pre-sintered body during milling . In view of industrial productivity, this has created a need for a zirconia pre-sintered body that has a low risk of chipping in the cutting and machining process.

In preparing a machined workpiece by cutting and machining a zirconia pre-sintered body into a tooth shape or other desired shape, the machined workpiece is fabricated together with a pillar (a support or a sprue as it is also called) that connects the machined workpiece to the remainder of the processed pre-sintered body. The pillar is removed from the machined workpiece with a tool or the like before sintering the machined workpiece. However, when the pre-sintered body is too soft, the pillar can break and detach itself from the pre-sintered body during milling, before the machined workpiece is finished. Another issue is that, when the pre-sintered body is too hard, it takes additional time to cut the pillar and separate the machined workpiece from the frame securing the machined workpiece, and it becomes increasingly difficult to separate the machined workpiece as the tool wears. There accordingly is a need for a zirconia pre-sintered body capable of forming a pillar that is not easily breakable during milling, and can be removed with ease.

Patent Literature 1, for example, discloses a zirconia pre-sintered body, or a porous pre-sintered zirconia material, that shows a $N_2$ adsorption and/or desorption of isotherm type IV according to IUPAC classification, and has a Vickers hardness from about 25 to about 150.

Patent Literature 2 discloses a zirconia pre-sintered body obtained from a composition comprising: a zirconia powder having a specific average particle diameter and in which 55% or more of the crystal system is monoclinic; and a stabilizer having a specific average particle diameter and that is capable of reducing a phase transformation of zirconia.

CITATION LIST

Patent Literature

Patent Literature 1: JP 2015-528730 T
Patent Literature 2: WO2018/056330

SUMMARY OF INVENTION

Technical Problem

However, studies by the present inventors revealed that the porous pre-sintered zirconia material of Patent Literature 1 involves a high probability of chipping during milling. The zirconia pre-sintered body of Patent Literature 2, when it uses a composition produced through a primary pulverization step in its method of production, was found to be susceptible to pillar breakage during milling, and have a high probability of chipping because of insufficient hardness in the zirconia pre-sintered body. Patent Literature 2 also discloses a zirconia pre-sintered body obtained from a composition produced through a secondary pulverization step. However, the probability of chipping was found to be high in such a zirconia pre-sintered body.

It is accordingly an object of the present invention to provide a zirconia pre-sintered body having excellent machinability, and, in addition to having a low probability of chipping (hereinafter, "chipping rate" or "frequency of chipping"), capable of forming a pillar that is not easily breakable during milling, and can be removed with ease. Another object of the present invention is to provide a method of production of such a zirconia pre-sintered body.

Solution to Problem

The present inventors conducted intensive studies to find a solution to the foregoing issues, and found that the above problems can be solved with a zirconia pre-sintered body containing a specific amount of stabilizer, and in which at least a part of the stabilizer is not dissolved in zirconia as a solid solution, in addition to having a specific Vickers hardness. The present invention was completed after further studies based on this finding.

Specifically, the present invention includes the following.

[1] A zirconia pre-sintered body comprising zirconia, and a stabilizer capable of reducing a phase transformation of zirconia,

the content of the stabilizer being 3 to 8 mol% relative to the total mole of the zirconia and the stabilizer,
at least a part of the stabilizer being not dissolved in zirconia as a solid solution, and
the zirconia pre-sintered body having a Vickers hardness of 65 to 135HV 5/30 as measured in compliance with JIS Z 2244:2009.

[2] The zirconia pre-sintered body according to [1], wherein the stabilizer is yttria.
[3] The zirconia pre-sintered body according to [2], wherein the percentage presence $f_y$ of yttria not dissolved in zirconia as a solid solution calculated from the following formula (1) falls within the range represented by formula (2),
[Math. 1]

$$f_y(\%) = \frac{I_y(111)}{I_y(111) + I_m(111) + I_m(11-1) + I_t(111) + I_c(111)} \times 100 \qquad (1)$$

$$f_y \geq 1.7 \times \text{(yttria content)} - 3.6 \qquad (2),$$

wherein $I_y(111)$ represents the peak intensity of the (111) plane of yttria near $2\theta = 29°$ in an X-ray diffraction pattern by CuKα radiation, $I_m(111)$ and $I_m(11-1)$ represent the peak intensities of the (111) plane and (11-1) plane, respectively, of the monoclinic crystal system of zirconia in the X-ray diffraction pattern, $I_t(111)$ represents the peak intensity of the (111) plane of the tetragonal crystal system of zirconia in the X-ray diffraction pattern, and $I_c(111)$ represents the peak intensity of the (111) plane of the cubic crystal system of zirconia in the X-ray diffraction pattern, and the yttria content represents the mole percentage of yttria relative to the total mole of zirconia and yttria.
[4] The zirconia pre-sintered body according to any one of [1] to [3], wherein the zirconia pre-sintered body shows a nitrogen adsorption and/or desorption of isotherm type III according to IUPAC classification.
[5] The zirconia pre-sintered body according to any one of [1] to [4], which has a density of 2.7 g/cm$^3$ to 4 g/cm$^3$.
[6] The zirconia pre-sintered body according to any one of [1] to [5], which comprises an adhesion of particles containing zirconia and a stabilizer, and the particles have an average particle diameter of 40 nm to 150 nm.
[7] The zirconia pre-sintered body according to any one of [1] to [6], wherein the content of the stabilizer is 3.2 to 6.5 mol% relative to the total mole of the zirconia and the stabilizer.
[8] The zirconia pre-sintered body according to any one of [1] to [7], which has a three-point flexural strength of 15 to 70 MPa as measured in compliance with JIS R 1601:2008.
[9] The zirconia pre-sintered body according to any one of [1] to [8], which has a frequency of chipping of 9% or less after milling.
[10] A dental material comprising a zirconia pre-sintered body of any one of [1] to [9].
[11] A method for producing a zirconia pre-sintered body, comprising the steps of:

producing a zirconia composition containing zirconia particles and particles of a stabilizer capable of reducing a phase transformation of zirconia, and in which the content of the stabilizer is 3 to 8 mol% relative to the total mole of the zirconia and the stabilizer; and

firing the zirconia composition to obtain a zirconia pre-sintered body having a Vickers hardness of 65 to 135HV 5/30 in compliance with JIS Z 2244:2009,

the zirconia composition producing step comprising the step of preparing a mixture by mixing the zirconia powder and the stabilizer; and the step of obtaining a zirconia granule by introducing a binder to the mixture and granulating the mixture,

the zirconia composition producing step comprising essentially no firing step.

[12] The method for producing a zirconia pre-sintered body according to [11], wherein the content of the binder is 1.2 to 2.8 mass% in the whole zirconia composition.

[13] The method for producing a zirconia pre-sintered body according to [11] or [12], wherein the zirconia in the zirconia composition is predominantly monoclinic in crystal system.

[14] The method for producing a zirconia pre-sintered body according to [13], wherein the monoclinic fraction in the crystal system of zirconia is 55% or more.

[15] The method for producing a zirconia pre-sintered body according to any one of [11] to [14], further comprising the step of press forming the zirconia granule into a zirconia molded body,

the press forming applying a surface pressure of 30 to 200 MPa in preparing the zirconia molded body, and the zirconia pre-sintered body having a density of 2.7 $g/cm^3$ to 4 $g/cm^3$.

[16] The method for producing a zirconia pre-sintered body according to [15], which comprises the step of pre-sintering the zirconia molded body at 830 to 1,080°C.

Advantageous Effects of Invention

According to the present invention, a zirconia pre-sintered body can be provided that has excellent machinability, and that, in addition to having a low probability of chipping, is capable of forming a pillar that is not easily breakable during milling, and can be removed with ease. The present invention can also provide a method of production of such a zirconia pre-sintered body. Because of excellent machinability, a zirconia pre-sintered body of the present invention can reduce the stress and time involved in milling and in polishing after sintering.

BRIEF DESCRIPTION OF DRAWINGS

FIG. 1 is a micrograph taken with a light microscope, showing a surface of a machined workpiece having a chipping rate of 1% according to Example 3.
FIG. 2 is a micrograph taken with a light microscope, showing a surface of a machined workpiece having a chipping rate of 10% according to Comparative Example 1.
FIG. 3 is a schematic diagram representing an example of a shape of a zirconia pre-sintered body before milling.
FIG. 4 is a schematic diagram representing an example of a machined workpiece and a pillar being formed by cutting and machining a zirconia pre-sintered body.

DESCRIPTION OF EMBODIMENTS

A zirconia pre-sintered body of the present invention comprises zirconia (zirconium oxide), and a stabilizer capable of reducing a phase transformation of zirconia (hereinafter, also referred to simply as "stabilizer"),

the content of the stabilizer being 3 to 8 mol% relative to the total mole of the zirconia and the stabilizer,
at least a part of the stabilizer being not dissolved in zirconia as a solid solution, and
the zirconia pre-sintered body having a Vickers hardness of 65 to 135HV 5/30 as measured in compliance with JIS Z 2244:2009.

A zirconia pre-sintered body of the present invention is described below. A zirconia pre-sintered body of the present invention can be a precursor (intermediate product) of a zirconia sintered body. In the present invention, "zirconia pre-sintered body" means, for example, a block formed while zirconia particles (powder) are not fully sintered.

A zirconia pre-sintered body of the present invention comprises zirconia, and a stabilizer capable of reducing a phase transformation of zirconia, Preferably, the stabilizer is one capable of forming partially-stabilized zirconia. Examples of the stabilizer include oxides such as calcium oxide (CaO), magnesium oxide (MgO), yttria, cerium oxide

(CeO$_2$), scandium oxide (Sc$_2$O$_3$), niobium oxide (Nb$_2$O$_5$), lanthanum oxide (La$_2$O$_3$), erbium oxide (Er$_2$O$_3$), praseodymium oxide (PreOn), samarium oxide (Sm$_2$O$_3$), europium oxide (Eu$_2$O$_3$), and thulium oxide (Tm$_2$O$_3$). The stabilizer is preferably yttria. The stabilizer content in a zirconia pre-sintered body of the present invention and in a sintered body thereof can be measured, for example, by inductively coupled plasma (ICP) emission spectral analysis or X-ray fluorescence analysis. The stabilizer (preferably yttria) content in a zirconia pre-sintered body of the present invention and in a sintered body thereof is preferably 3.0 to 8.0 mol%, more preferably 3.2 to 6.5 mol%, even more preferably 3.5 to 6.0 mol%, particularly preferably 3.9 to 5.4 mol% relative to the total mole of zirconia and stabilizer. With a stabilizer content of less than 3.0 mol%, the zirconia sintered body shows insufficient translucency. With a stabilizer content of more than 8.0 mol%, the probability of chipping increases, and the strength of the zirconia sintered body decreases as a result of increased amounts of a phase that transforms into the tetragonal and/or cubic crystal systems.

In a zirconia pre-sintered body of the present invention, it is required that at least a part of the stabilizer be not dissolved in zirconia as a solid solution. That is, at least a part of zirconia crystals needs to exist as being monoclinic in crystal system. Whether a part of stabilizer is not dissolved in zirconia as a solid solution can be determined from an X-ray diffraction (XRD) pattern, for example. The presence of peaks derived from the stabilizer in an XRD pattern of the zirconia pre-sintered body means the presence of a stabilizer that is not dissolved in zirconia as a solid solution in the zirconia pre-sintered body. A peak derived from the stabilizer is basically not observable in an XRD pattern when the stabilizer is fully dissolved as a solid solution. It is, however, possible, depending on the crystal state or other conditions of the stabilizer, that the stabilizer is not dissolved in zirconia as a solid solution even when the XRD pattern does not show peaks for stabilizers. When the predominant crystal system of zirconia is tetragonal and/or cubic and there is no peak attributed to the stabilizer in the XRD pattern, the stabilizer can be thought of having dissolved in zirconia as a solid solution for the most part, basically completely. In a zirconia pre-sintered body of the present invention, it is not required that the stabilizer be fully dissolved in zirconia as a solid solution. In the present invention, "stabilizer being dissolved as a solid solution" means that, for example, the elements (atoms) contained in the stabilizer are dissolved in zirconia as a solid solution.

A zirconia pre-sintered body of the present invention has a Vickers hardness of 65HV 5/30 or more, preferably 67HV 5/30 or more, more preferably 69HV 5/30 or more. The Vickers hardness is 135HV 5/30 or less, preferably 133HV 5/30 or less, more preferably 130HV 5/30 or less because lower values of Vickers hardness enable the milled workpiece to be more easily separated from the frame securing the workpiece, and can reduce wear in the tool and enable faster separation. The frequency of chipping increases when the Vickers hardness is less than 65HV 5/30, whereas the milled workpiece cannot be easily separated from the frame securing the workpiece when the Vickers hardness is more than 135HV 5/30. A zirconia pre-sintered body of the present invention can reduce the probability of chipping with the Vickers hardness confined in the foregoing predetermined ranges, and with at least a part of the stabilizer not being dissolved in zirconia as a solid solution. In the present invention, the method of measurement of Vickers hardness complies with JIS Z 2244:2009, as will be detailed in the EXAMPLES section below.

Factors that are important for achieving the Vickers hardness of a zirconia pre-sintered body of the present invention are the percentage presence of undissolved stabilizer in the zirconia pre-sintered body, the density of the pre-sintered body, the average particle diameter of particles contained in the pre-sintered body, and the strength of the pre-sintered body. Methods of production of a zirconia pre-sintered body and a zirconia composition are important for achieving these factors, specifically, a method that comprises essentially no firing step in the production of a zirconia composition, the binder content of when producing a composition, the surface pressure in the fabrication of a zirconia molded body, and the pre-sintering temperature of when producing a pre-sintered body, as described below.

The following describes a preferred embodiment, taking as an example a zirconia pre-sintered body in which the stabilizer contains yttria. In a zirconia pre-sintered body of the present invention, the percentage presence $f_y$ of yttria not dissolved in zirconia as a solid solution (hereinafter, also referred to as "undissolved yttria") can be calculated using the following formula (1).

[Math. 2]

$$f_y(\%) = \frac{I_y(111)}{I_y(111) + I_m(111) + I_m(11\text{-}1) + I_t(111) + I_c(111)} \times 100 \qquad (1)$$

In formula (1), $I_y(111)$ represents the peak intensity of the (111) plane of yttria near $2\theta = 29°$ in an XRD pattern by CuKα radiation, $I_m(111)$ and $I_m(11\text{-}1)$ represent the peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

Zirconia is brought to a stable or metastable state as the stabilizer dissolves in zirconia as a solid solution, that is, as a result of the stabilizer and zirconia diffusing into each other. A known property of metastable or stable zirconia is that it undergoes a phase transformation and relieves an external force in response to an externally applied force. This means that the component that relieves the stress due to external force increases, and chipping occurs more often during milling as the stabilizer becomes lost by forming a solid solution (i.e., as the percentage presence of dissolved stabilizer increases). It is accordingly preferable to have fewer amounts of dissolved stabilizer.

Because dissolution of zirconia and yttria is a phenomenon that involves movement of zirconia and yttria atoms due to their concentration gradients, the amount of dissolution varies with the yttria content, and the percentage presence $f_y$ of undissolved yttria is dependent on the yttria content.

It is accordingly preferable in view of Vickers hardness and chipping rate that the percentage presence $f_y$ of undissolved yttria in the zirconia pre-sintered body satisfy the range represented by formula (2), depending on the yttria content.

$$f_y \geq 1.7 \times \text{(yttria content)} - 3.6 \qquad (2)$$

Specifically, $f_y$ is preferably 3.2% or more, more preferably 4.1% or more, even more preferably 5.1% or more when the yttria content is 4.0 mol% . When the yttria content is 4.5 mol%, $f_y$ is preferably 4.0% or more, more preferably 5.1% or more, even more preferably 6.1% or more. When the yttria content is 4.7 mol%, $f_y$ is preferably 4.3% or more, more preferably 5.4% or more, even more preferably 6.4% or more. When the yttria content is 5.0 mol%, $f_y$ is preferably 4.9% or more, more preferably 5.9% or more, even more preferably 6.9% or more. When the yttria content is 5.3 mol%, $f_y$ is preferably 5.4% or more, more preferably 6.5% or more, even more preferably 7.5% or more. When the yttria content is 6.0 mol%, $f_y$ is preferably 6.6% or more, more preferably 7.7% or more, even more preferably 8.7% or more. When the yttria content is 8.0 mol%, $f_y$ is preferably 10.0% or more, more preferably 11.1% or more, even more preferably 12.2% or more. The percentage presence of dissolved stabilizer is smaller, and the chipping rate decreases with $f_y$ satisfying formula (2). Even lower chipping rates can be achieved with $f_y$ satisfying formula (2) and the Vickers hardness confined in the predetermined ranges. With the undissolved yttria being present at the desired level of percentage presence $f_y$, the zirconia pre-sintered body can show a nitrogen adsorption and/or desorption of isotherm type III according to IUPAC classification. The method of measurement according to IUPAC classification is as described in the EXAMPLES section below.

In view of confining Vickers hardness in the preferred ranges and in view of reducing the chipping rate, a zirconia pre-sintered body of the present invention has a density of preferably 2.7 to 4.0 g/cm³, more preferably 2.9 to 3.6 g/cm³, even more preferably 3.1 to 3.4 g/cm³. With a density of less than 2.7 g/cm³, it may not be possible to obtain a sufficient Vickers hardness, and machinability may decrease. With a density of more than 4.0 g/cm³, machinability may decrease as a result of excessively high Vickers hardness. The density can be calculated, for example, as a ratio of the mass of pre-sintered body to the volume of pre-sintered body. The density of a zirconia pre-sintered body means the density of a pre-sintered body obtained after a molded body prepared by filling zirconia granules into a specific mold (e.g., a die) and molding the zirconia granules into a specific shape under pressure is heated at a temperature that allows yttria to moderately form a solid solution and that causes moderate necking (adhesion) after the binder is removed by heating the molded body at a temperature that allows removal of the binder. The temperature that removes the binder is not particularly limited, as long as the binder can be removed, and may be 150 to 500°C. The temperature that allows yttria to moderately form a solid solution and that causes moderate necking (adhesion) is not particularly limited, and may be 800 to 1,050°C.

In a zirconia pre-sintered body of the present invention, at least a part of stabilizer is not dissolved in zirconia as a solid solution. Because of this, it is required in a zirconia pre-sintered body of the present invention and in a material zirconia composition used for the production of a zirconia pre-sintered body of the present invention that at least a part of zirconia crystals exist as being monoclinic in crystal system. Preferably, zirconia is predominantly monoclinic in crystal system. In the present invention, "being predominantly monoclinic in crystal system" means that the fraction $f_m$ of the monoclinic crystal system of zirconia calculated from the formula (3) below is 50% or more relative to the total amount of all the crystal systems (monoclinic, tetragonal, and cubic) of zirconia. In a zirconia pre-sintered body of the present invention, the fraction $f_m$ of the monoclinic crystal system of zirconia calculated from the formula (3) below is preferably 55% or more, more preferably 60% or more, even more preferably 70% or more, yet more preferably 75% or more, particularly preferably 80% or more, still more preferably 85% or more, most preferably 90% or more relative to the total amount of the monoclinic, tetragonal, and cubic crystal systems of zirconia. The fraction $f_m$ of monoclinic crystal system can be calculated from the formula (3) below, using peaks in an X-ray diffraction (XRD) pattern by CuKα radiation.

In a zirconia pre-sintered body of the present invention, the peaks for tetragonal and cubic crystal systems may be essentially undetectable. That is, the fraction $f_m$ of the monoclinic crystal system may be 100%.

[Math. 3]

$$f_m(\%) = \frac{I_m(111) + I_m(11-1)}{I_m(111) + I_m(11-1) + I_t(111) + I_c(111)} \times 100 \qquad (3)$$

In formula (3), $I_m(111)$ and $I_m(11\text{-}1)$ represent the peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

A zirconia pre-sintered body of the present invention comprises an adhesion of particles formed by a zirconia composition. The extent of adhesion varies with the average particle diameter of these particles, and causes changes in the hardness of the pre-sintered body. Necking (adhesion) tends to occur more often during pre-sintering as the average particle diameter of particles becomes smaller. The average particle diameter (average primary particle diameter) of particles constituting granules is preferably 40 to 150 nm. An average particle diameter of 40 nm or more is preferable because particles with such an average particle diameter do not strongly adhere to one another, and do not easily increase hardness. An average particle diameter of 150 nm or less is preferable because, with such an average particle diameter, smaller particles in a particle size distribution do not easily become absorbed, and adhesion due to particle size differences is less likely to occur. The average particle diameter of particles is more preferably 95 to 130 nm, even more preferably 110 to 130 nm. The method of measurement of average particle diameter is as described in the EXAMPLES section below.

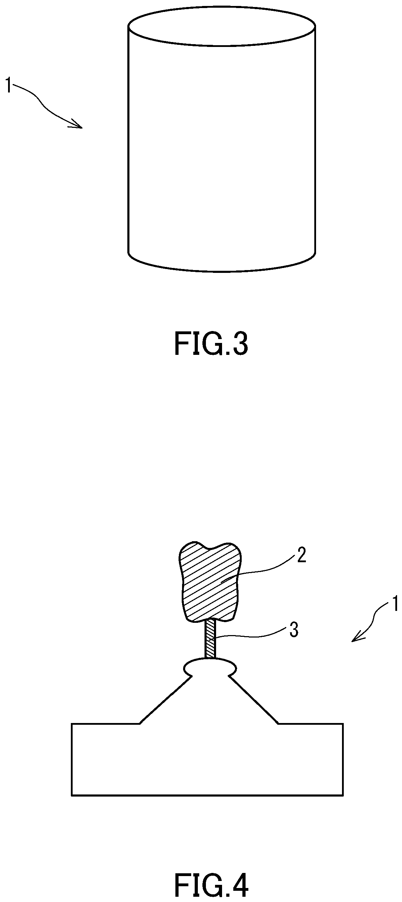

The hardness during milling is also influenced by the strength of the pre-sintered body. The strength of a zirconia pre-sintered body according to the present invention can be evaluated by, for example, measuring the flexural strength of the zirconia pre-sintered body. In order to provide the strength that enables mechanical working, the zirconia pre-sintered body has a three-point flexural strength of preferably 15 MPa or more, more preferably 18 MPa or more, even more preferably 20 MPa or more as measured in compliance with JIS R 1601:2008. When the three-point flexural strength of the zirconia pre-sintered body is less than 15 MPa, there is an increased possibility of, for example, breaking the pillar 3 (a support or a sprue) while cutting and machining the zirconia pre-sintered body 1 of the shape shown in FIG. 3 into the machined workpiece 2 of the desired shape shown in FIG. 4, causing the pillar 3 to detach itself from the the remainder of the zirconia pre-sintered body before the zirconia pre-sintered body is cutt and machined into the desired machined workpiece. For ease of mechanical working, the zirconia pre-sintered body has a three-point flexural strength of preferably 70 MPa or less, more preferably 60 MPa or less, even more preferably 50 MPa or less, particularly preferably 40 MPa or less. Taken together with the preferred ranges of Vickers hardness, the zirconia pre-sintered body has a three-point flexural strength of preferably 15 to 70 MPa, more preferably 18 to 60 MPa, even more preferably 20 to 50 MPa, particularly preferably 20 to 40 MPa.

A certain preferred embodiment is, for example, a dental material comprising the zirconia pre-sintered body. In dental products, it is preferable to have a lower chipping rate in the zirconia pre-sintered body because surface smoothness is aesthetically important in dental products. A lower chipping rate is preferred also in view of reducing the amount of work needed to make adjustments in a dental material after firing the machined workpiece. The chipping rate is preferably 9% or less, more preferably 7% or less, even more preferably 5% or less, particularly preferably 3% or less, most preferably 1% or less. The method of measurement of chipping rate is as described in the EXAMPLES section below.

The following describes a zirconia composition for producing a zirconia pre-sintered body of the present invention. The zirconia composition is a precursor of the zirconia pre-sintered body of the present invention described above. In the present invention, the zirconia composition comprises zirconia and a stabilizer. The content of the zirconia and stabilizer in the zirconia composition is calculated from the content of the zirconia and stabilizer a predetermined zirconia pre-sintered body. The zirconia composition and the zirconia pre-sintered body have the same zirconia and stabilizer content.

The zirconia composition is inclusive of a powder, a fluid containing a powder added into a solvent, and a molded body formed by molding a powder into a predetermined shape. When the zirconia composition has a form of a powder, the zirconia composition may be a cluster of granules. The granules are aggregates of primary particles.

In the present invention, "primary particles" refers to a bulk of the smallest unit. For example, "primary particles" refers to spheres that appear to be separatable from one another under an electron microscope (for example, a scanning electron microscope), with no binding between primary particles. The primary particles include zirconia particles and stabilizer particles.

Preferably, the particles constituting granules of the zirconia composition are predominantly primary particles. Aggregates of primary particles are secondary particles. For example, primary particles preferably outnumber secondary particles when observed in an electron microscope image. The secondary particles normally have irregular shapes, and the roundness of granules (described later) decreases as the number of secondary particles increases.

The particle size of primary particles in particles constituting granules of the zirconia composition influences the extent of adhesion in pre-sintering, and thus the hardness of the pre-sintered body. An average particle diameter of 40 nm or more is preferable because particles with such an average particle diameter do not strongly adhere to one another to reduce the surface area of primary particles contained in the pre-sintered body, and are less likely to increase hardness. An average particle diameter of 150 nm or less is preferable because, with such an average particle diameter, smaller particles in a particle size distribution do not easily become absorbed, and adhesion due to particle size differences is less likely to occur. The average particle diameter is preferably 40 to 150 nm, more preferably 95 to 130 nm, even more preferably 110 to 130 nm.

The particles constituting granules of the zirconia composition have a BET specific surface area of preferably $7.0 \, m^2/g$ or more, more preferably $7.5 \, m^2/g$ or more, even more preferably $8 \, m^2/g$ or more as measured in compliance with JIS Z 8830:2013. With a BET specific surface area of $7.0 \, m^2/g$ or more, the sintered body can have reduced cloudiness upon sintering. The BET specific surface area is preferably $30 \, m^2/g$ or less, more preferably $25 \, m^2/g$ or less, even more preferably $20 \, m^2/g$ or less. With a BET specific surface area of $30 \, m^2/g$ or less, the particles are less likely to be affected by uneven temperatures in a furnace. With such a BET specific surface area, the translucency of the sintered body is less likely to decrease even when sintering has a shorter firing time. As used herein, "BET specific surface area" is a specific surface area measured without distinguishing primary particles and secondary particles.

The zirconia composition may have a form of a granule in 50% or more, preferably 70% or more, more preferably 80% or more, even more preferably 90% or more of its zirconia.

When the zirconia composition does not have a form of a granule, the zirconia particles constituting a powder may have the average particle diameter above, and, optionally, the BET specific surface area above.

The granules in the zirconia composition have an average particle diameter (secondary particle diameter; hereinafter, also referred to as "average granule diameter") of preferably 10 $\mu$m or more, more preferably 12 $\mu$m or more, even more preferably 14 $\mu$m or more. With an average granule diameter of less than 10 $\mu$m, sufficient deaeration may not be achieved during molding because of entrapment of air occurring when feeding the granules into a die, and it may not be possible to prepare a uniform and dense molded body. Another possibility is that granules may blow out from gaps during molding, and produce a molded body failing to satisfy the required predetermined volume. The average granule diameter is preferably 200 $\mu$m or less, more preferably 190 $\mu$m or less, even more preferably 180 $\mu$m or less, particularly preferably 150 $\mu$m or less, most preferably 100 $\mu$m or less. With an average granule diameter of more than 200 $\mu$m, cavities tend to form inside granules. Void formation also becomes likely upon feeding granules into a die. These phenomena may cause insufficient deaeration during molding, and it may not be possible to prepare a dense molded body. It also may not be possible to prepare a molded body having a desired size because of increased shrinkage occurring during molding. Preferably, 50% or more of zirconia in the zirconia composition constitute granules. Preferably, the average granule diameter is measured using a method that does not break the granules. The average granule diameter can be measured by, for example, dry sieving or wet sieving. Dry sieving may follow the sieving test method described in JIS Z 8815:1994, and may be manual sieving or machine sieving, of which the latter is preferred. The sieve used for sieving may be the sieve described in Test Sieves in JIS Z 8801-1:2019. Sieving may be performed with a measurement device, for example, such as a Ro-Tap sieve shaking machine or a sonic sieving analyzer. The Ro-Tap sieve shaking machine may be, for example, the RPS-105M manufactured by Seishin Enterprise Co., Ltd.. The sonic sieving analyzer may be, for example, the robot sifter RPS-01 or RPS-02 manufactured by Seishin Enterprise Co., Ltd.

Preferably, the granules in the zirconia composition have as high a sphericity as possible. With increased granule sphericity, interfacial mixing of zirconia powders can occur between layers when zirconia powders of different compositions are laminated. With increased sphericity, it is also possible to increase the packing density of when a zirconia powder is filled into a mold to prepare a molded body, even when the average particle diameter is the same. The strength and translucency of sintered body can increase by increasing the packing density, which is a density of a molded body formed into a specific shape under applied pressure after zirconia granules are filled into a specific mold (such as a die). It is also possible to more easily fill granules into angular portions when the mold have angular portions.

The sphericity of granules in the zirconia composition can be represented by parameters, for example, such as light bulk density, and heavy bulk density.

The zirconia composition has a light bulk density of preferably $1.0 \, g/cm^3$ or more, more preferably $1.1 \, g/cm^3$ or more, even more preferably $1.2 \, g/cm^3$ or more, particularly preferably $1.3 \, g/cm^3$ or more. The light bulk density can be measured in compliance with JIS R 9301-2-3:1999.

The zirconia composition has a heavy bulk density of preferably $1.3 \, g/cm^3$ or more, more preferably $1.4 \, g/cm^3$ or more, even more preferably $1.5 \, g/cm^3$ or more. The heavy bulk density can be measured in compliance with JIS R 9301-2-3:1999.

The zirconia composition preferably comprises a binder.

The binder may be, for example, an organic binder. Examples of the organic binder include common binders such as acrylic binders, acrylate binders, paraffinic binders, fatty acid binders, and polyvinyl alcohol binders. Preferred among these organic binders is one having a carboxyl group in the molecular chain, or a derivative of carboxylic acids, more preferably an acrylic binder, even more preferably a polyacrylate having water solubility. The polyacrylate may be a product of copolymerization of acrylic acid or methacrylic acid with maleic acid, and may contain sulfonic acid. Examples of the cations of the salt include sodium and ammonium.

The binder content in the zirconia composition is important for adjusting the distance between primary particles in the zirconia composition, and for increasing and decreasing Vickers hardness or the strength of pre-sintered body. The binder content is preferably 1.2 to 2.8 mass%, more preferably 1.5 to 2.5 mass%, even more preferably 1.8 to 2.2 mass% in the whole zirconia composition. When the binder content is less than 1.2 mass% in the whole zirconia composition, there is a possibility of the pre-sintered body increasing its strength, and becoming hard by the time the machined workpiece is removed. When the binder content is more than 2.8 mass%, there is an increased possibility of the pre-sintered body decreasing its strength and causing detachment of the machined workpiece, in addition to increasing the chipping rate.

The zirconia composition may optionally comprise an additive such as a colorant (including a pigment, a composite pigment, and a fluorescent agent), alumina ($Al_2O_3$), titanium oxide ($TiO_2$), silica ($SiO_2$), a dispersant, or an antifoaming agent. These components may be used alone, or two or more thereof may be used in combination. The pigment may be, for example, an oxide of at least one element selected from the group consisting of Ti, V, Cr, Mn, Fe, Co, Ni, Zn, Y, Zr, Sn, Sb, Bi, Ce, Sm, Eu, Gd, and Er. The composite pigment may be, for example, $(Zr,V)O_2$, $Fe(Fe,Cr)_2O_4$, $(Ni,Co,Fe)(Fe,Cr)_2O_4 \cdot ZrSiO_4$, or $(Co,Zn)Al_2O_4$. The fluorescent agent may be, for example, $Y_2SiO_5:Ce$, $Y_2SiO_5:Tb$, $(Y,Gd,Eu)BO_3$, $Y_2O_3:Eu$, YAG:Ce, $ZnGa_2O_4:Zn$, or $BaMgAl_{10}O_{17}:Eu$.

The additive may be added during mixing or pulverization, or may be added after pulverization.

A method of production of a zirconia pre-sintered body may be, for example, a method comprising the steps of:

producing a zirconia composition containing zirconia particles and particles of a stabilizer capable of reducing a phase transformation of zirconia, and in which the content of the stabilizer is 3 to 8 mol% relative to the total mole of the zirconia and the stabilizer; and
firing the zirconia composition to obtain a zirconia pre-sintered body having a Vickers hardness of 65 to 135HV 5/30 in compliance with JIS Z 2244:2009,

The step of producing a zirconia composition is described first.

First, zirconia (preferably, zirconia particles) and a stabilizer are mixed in predetermined proportions to prepare a mixture (mixing step). For example, when the stabilizer is yttria, zirconia and yttria may be mixed in such proportions that the yttria content falls in the foregoing range. The mixing is not particularly limited, and a known mixer may be used. When a solvent is used for mixing, the resultant mixture may have a form of a slurry, for example. The solvent is not particularly limited, and may be water or an organic solvent. Mixing may be achieved by dry mixing or wet mixing. The mixture may be pulverized so that the zirconia particles contained in the zirconia composition have the average particle diameter specified above (preferably, 0.10 μm to 0.14 μm), and may be optionally pulverized until the zirconia particles have the BET specific surface area specified above (pulverization step). The average primary particle diameter can be measured by a laser diffraction/scattering particle size distribution measurement method. For example, the average primary particle diameter can be measured by volume with ultrasonic waves applied after a slurry diluted with water is subjected to 30 minutes of ultrasonication, using a laser diffraction/scattering particle size distribution analyzer (manufactured by Horiba Ltd. under the trade name Partica LA-950). The mixing and pulverization may be performed in a single step. The pulverization method is not particularly limited, and a known pulverizer (for example, a ball mill or a bead mill) may be used. The binder may be added in the mixing step and/or the pulverization step so as to confine the binder content in the foregoing predetermined proportions in the whole zirconia composition. After the mixing step and/or the pulverization step, the resulting mixture can be spray dried to bring the zirconia composition into a granular form such as above (drying step). The method of spray drying is not particularly limited, and a known spray drying device (such as a spray dryer) may be used. A zirconia composition according to the present invention can be produced in this fashion. Preferably, zirconia in the zirconia composition is predominantly monoclinic in crystal system. Preferably, the production of a zirconia composition comprises essentially no firing step. By "essentially no firing step", it means that, in view of reducing the chipping rate, the production of a zirconia composition does not include a heat treatment other than the drying step (e.g., spray drying), in order to reduce dissolution of the stabilizer in zirconia as a solid solution. The temperature of a firing step that is essentially absent is not particularly limited, and may be 800°C or more, or 900°C or more.

In the pulverization step, the zirconia composition has an average particle diameter of preferably less than 0.13 μm, more preferably 0.125 μm or less, even more preferably 0.12 μm or less, particularly preferably 0.115 μm or less. The translucency of sintered body can increase when the zirconia composition has an average particle diameter of less than 0.13 μm.

Preferably, zirconia and the stabilizer are separately prepared. For example, it is preferable to provide separate independent preparation steps (for example, production steps) for zirconia and stabilizer, instead of simultaneously precipitating zirconia and stabilizer (in the same step). In this way, dissolution of the stabilizer in zirconia as a solid solution can be reduced in the production of pre-sintered body described below.

Generally, there are cases where the pulverization and drying steps are performed again after the stabilizer is dissolved in zirconia as a solid solution by heat treatment in the production of a zirconia composition. However, heat treatment of a zirconia composition is not preferable in the present invention because, as the dissolution of the stabilizer proceeds, the chipping rate increases as a result of heat generating a phase that transforms into a tetragonal and/or cubic phase in crystal system. In view of reducing the chipping rate, it is preferable in the present invention that the production method prepare a granule or a powder without additionally performing a heat treatment other than the drying step (e.g., spray drying), in order to reduce dissolution of the stabilizer. A method of production including fewer rounds of mixing and pulverization is more preferable because the energy of mixing and pulverization may facilitate dissolution of the stabilizer.

A zirconia powder with a solid solution of yttria is generally prepared by coprecipitation and hydrolysis. In coprecipitation and hydrolysis, a mixture of hydrous zirconia and yttria is prepared from zirconium oxychloride and yttrium chloride in the same step, and the mixture is fired at 800°C to 900°C to prepare a zirconia powder stabilized with yttria (yttrium) dissolving as a solid solution. The yttria-dissolved zirconia is predominantly tetragonal and/or cubic in crystal system. The zirconia powder obtained from such zirconia has a particle size on the order of several tens of nanometers. In order to use the zirconia powder as a raw material of zirconia sintered body, the fired material is pulverized to a predetermined particle size, and granulated into a zirconia composition.

In a zirconia composition prepared by coprecipitation or hydrolysis, the adhering temperature in the region of temperature in which the pre-sintered body is prepared occurs near temperatures at which the organic binder is removed, and/or the zirconia composition is more dependent on temperature. When there is unevenness in the state of the organic binder being present, the primary particles of the zirconia composition prepared by coprecipitation or hydrolysis form strong necks in a localized fashion, according to the particle size. Because this increases the chipping rate of machined workpiece, zirconia compositions prepared by coprecipitation and hydrolysis are not preferred.

The granule or powder can be formed into a molded body by applying an external force. The molding method is not limited to specific methods, and a suitable method may be appropriately selected according to intended use. For example, molding may be achieved by press forming, injection molding, or stereolithography. Molding may be performed in phases. For example, the zirconia composition may be formed into a molded body by press forming, followed by CIP.

The molded body may be disc-shaped, cuboidal, or cylindrical, or may have a shape of a dental product (for example, a crown shape).

For example, zirconia granules may be filled into a die, and pressed hard by uniaxial pressing into a columnar zirconia molded body. The molded body can have increased density by increasing the surface pressure of press forming. However, a zirconia molded body with an excessively high density produces an excessively hard zirconia pre-sintered body. The surface pressure of press forming in the preparation of a zirconia molded body is therefore preferably 30 to 200 MPa. With a surface pressure of 30 MPa or more in press forming, the zirconia molded body can have excellent shape retention. With a surface pressure of 200 MPa or less, the density of the zirconia molded body does not overly increase, and it is easier to prevent hardening. The zirconia granules or zirconia composition obtained by the foregoing method of production of a zirconia composition can produce the desired Vickers hardness, and show physical properties (for example, strength) attributed to the desired Vickers hardness by being press formed under a predetermined surface pressure, and pre-sintered at the pre-sintering temperature described below.

The molded body includes a molded body compacted by a high-temperature pressing process such as CIP(Cold Isostatic Pressing). In view of the above, the hydraulic pressure is preferably 30 to 200 MPa.

A zirconia pre-sintered body of the present invention can be a precursor (intermediate product) of a zirconia sintered body according to the present invention. The pre-sintered body refers to a product resulting from firing (i.e., pre-sintering) at a temperature that does not sinter the zirconia composition. For example, the pre-sintered body refers to a state where zirconia particles (powder) are forming necks (adhesion), and are not fully sintered. The pre-sintered body includes those after shaping. A zirconia pre-sintered body according to the present invention includes, for example, a dental product (for example, a crown-shaped prosthesis) obtained by working a pre-sintered zirconia disc with a CAD/CAM (Computer-Aided Design/Computer-Aided Manufacturing) system.

A zirconia pre-sintered body of the present invention has the same zirconia and stabilizer content as the zirconia composition to be prepared into a zirconia pre-sintered body. The stabilizer is preferably yttria in view of the strength and translucency of a sintered body fabricated from a zirconia pre-sintered body of the present invention.

The undissolved fraction of the stabilizer in a zirconia pre-sintered body of the present invention is calculated as percentage presence $f_y$ of undissolved yttria, as described above. The preferred range is as described above; however, it depends on the pre-sintering temperature of when preparing the zirconia pre-sintered body.

That is, the pre-sintering temperature influences the Vickers hardness or the strength of the pre-sintered body, and the hardness and chipping rate of the pre-sintered body vary with the pre-sintering temperature.

In view of the above, the pre-sintering temperature (highest pre-sintering temperature) in a method of production of a zirconia pre-sintered body of the present invention is preferably 830 to 1,080°C, more preferably 850 to 1,050°C, even more preferably 895 to 1,000°C. With a pre-sintering temperature of less than 830°C, there is an increased possibility of the machined workpiece detaching itself during cutting and machining as a result of breakage of the pillar, with which a part of the zirconia pre-sintered body produced by the production method satisfying the foregoing predetermined conditions is connected to the machined workpiece being milled, in addition to increasing the chipping rate as a result of decrease of Vickers hardness. With a pre-sintering temperature of higher than 1,080°C, the machined workpiece may become too hard as a result of increased progression of adhesion, and it may take time to separate the machined workpiece from the frame securing the machined workpiece, in addition to making separation difficult as the tool wears out faster. Another possibility that, because of increased dissolution of the stabilizer according to the stabilizer content, the chipping rate may increase as a result of heat generating a phase that transforms into a tetragonal and/or cubic phase in crystal system.

The foregoing ranges of highest pre-sintering temperature are preferable because, by retaining the pre-sintered body at the foregoing highest pre-sintering temperature for a certain time period, it may be possible to confine the hardness of the pre-sintered body in the preferred range, and lower the chipping rate. The pre-sintering conditions depend on the density of the pre-sintered body, the average particle diameter of the pre-sintered body, and the binder content. Preferably, the pre-sintered body is retained at the highest pre-sintering temperature for 30 minutes to 6 hours. The rate of temperature increase and the rate of temperature decrease are preferably 300°C/min or less.

A zirconia pre-sintered body of the present invention can be milled to fabricate a machined workpiece. The milling method is not limited to specific methods, and a suitable method may be appropriately selected according to intended use. For example, a zirconia disc (pre-sintered body) can be milled into a shape of a dental product (for example, a crown-shaped prosthesis) with a CAD/CAM system to fabricate a machined workpiece.

The surface smoothness of a machined workpiece can be increased using a tool such as PearlSurface.

A zirconia sintered body (hereinafter, also referred to simply as "zirconia sintered body" or "sintered body") can be fabricated through the sintering step of firing a zirconia pre-sintered body of the present invention or its machined workpiece at a temperature that sinters zirconia particles (sinterable temperature). The firing temperature is, for example, preferably 1,400°C or more, more preferably 1,450°C or more. The firing temperature is, for example, 1,650°C or less, more preferably 1,600°C or less. The rate of temperature increase and the rate of temperature decrease are preferably 300°C/min or less.

In the sintering step, the retention time at the sinterable temperature (for example, highest firing temperature) is preferably less than 120 minutes, more preferably 90 minutes or less, even more preferably 75 minutes or less, yet more preferably 60 minutes or less, particularly preferably 45 minutes or less, most preferably 30 minutes or less. The retention time is preferably 1 minute or more, more preferably 5 minutes or more, even more preferably 10 minutes or more.

With a zirconia pre-sintered body of the present invention, the firing time in the fabrication of a sintered body can be reduced without decreasing the translucency and strength of the zirconia sintered body fabricated. Particularly, the retention time at the highest firing temperature in the fabrication of a sintered body can be reduced (short sintering). In this way, more efficient production is possible, and a time burden for patients can be reduced in applying a zirconia pre-sintered body of the present invention to a dental product because it takes less time before treatment is possible with a dental product after deciding dimensions and milling the dental product to be used for treatment. In addition, the energy cost can be reduced.

In the sintering step, the retention time at the sinterable temperature (for example, highest firing temperature) may be, for example, 25 minutes or less, 20 minutes or less, or 15 minutes or less.

Preferably, the rate of temperature increase and the rate of temperature decrease in the sintering step are set so as to reduce the time required for the sintering step. For example, the rate of temperature increase may be set so that the highest firing temperature is reached in the shortest possible time, depending on the capabilities of the furnace. The rate of temperature increase to the highest firing temperature may be, for example, 10°C/min or more, 50°C/min or more, 100°C/min or more, 120°C/min or more, 150°C/min or more, or 200°C/min or more. Preferably the rate of temperature decrease is set to a rate that does not cause defects, such as cracks, in the sintered body. For example, the sintered body may be allowed to cool at room temperature after heating.

The following describes a zirconia sintered body obtained by sintering a zirconia pre-sintered body of the present invention or its machined workpiece. A zirconia sintered body can be said as, for example, a state after zirconia particles (powder) have sintered. The zirconia sintered body has a relative density of preferably 99.5% or more. The relative density can be calculated as a ratio of the actual density, measured by the Archimedes method, with respect to the theoretical density. By relative density, it means a value obtained by theoretically dividing density d1 by density d2, where d1 is the density of a sintered body after high-temperature firing of a molded body prepared by filling granules into a certain mold, and pressing the granules into a specific shape, and d2 is the density of zirconia with no internal voids theoretically.

The zirconia sintered body encompasses not only sintered bodies after sintering of molded zirconia particles under ordinary pressure or no applied pressure, but sintered bodies compacted by a high-temperature pressing process such as HIP (Hot Isostatic Pressing).

Preferably, the zirconia sintered body has as high a density as possible because higher densities mean fewer internal voids, and less scattering of light and higher translucency. The density is preferably more than 5.71 g/cm$^3$, preferably 5.87 g/cm$^3$ or more, even more preferably essentially no voids.

Preferably, the zirconia sintered body contains more particles that are smaller than the wavelengths of visible light because the zirconia sintered body can have higher translucency and higher strength with such particles. The particle diameter of such particles is preferably less than 0.588 $\mu$m, more preferably 0.5 $\mu$m or less, even more preferably 0.3 $\mu$m or less.

The zirconia sintered body has the same zirconia and stabilizer content as the composition and/or pre-sintered body to be prepared into a sintered body. Concerning the crystal systems of zirconia in the zirconia sintered body, the fraction of monoclinic crystal system is preferably 10% or less, more preferably 5% or less. Even more preferably, the monoclinic crystal system is essentially absent (can be regarded as 0%). The tetragonal and/or cubic crystal systems represent crystal systems other than the monoclinic crystal system.

Concerning the fraction of the stabilizer dissolved as a solid solution in the zirconia sintered body, it is preferable that 95% or more of the stabilizer contained be dissolved in zirconia as a solid solution. More preferably, essentially all the stabilizer is dissolved in zirconia as a solid solution. The percentage presence $f_y$ of undissolved yttria is preferably 5% or less, more preferably 1% or less. Even more preferably, essentially all the yttria is dissolved as a solid solution (the percentage presence $f_y$ of undissolved yttria is 0%).

The zirconia sintered body has a translucency of preferably 12 or more, more preferably 14 or more, even more preferably 15 or more, yet more preferably 16 or more. As used herein, "translucency" takes a lightness value L* (color space) of L*a*b*color system (JIS Z 8781-4:2013), and it is a value after subtracting a second L* value from a first L* value, where the first L* value is an L* value measured for a 1.2 mm-thick specimen against a white background, and the second L* value is an L* value measured for the same specimen against a black background. A specimen can be prepared as follows, for example. First, granules (composition) are press formed to provide a thickness of 1.2 mm for the sintered body to be produced, and subsequent CIP molding forms, for example, a disc-shaped molded body measuring 19 mm in diameter. The molded body can then be fired under predetermined firing conditions to prepare a sintered body, or a specimen, having a thickness of 1.2 mm. For the measurement of L* values, a color-difference meter (for example, a dental colorimeter Crystaleye, CE100-DC/JP manufactured by Olympus Corporation) can be used to measure L* values against black and white backgrounds after applying a contact liquid to a specimen surface. The contact liquid may be, for example, one having a measured refractive index nD of 1.60 at 589 nm wavelength (sodium D-line).

The zirconia sintered body may be a molded body of a predetermined shape. For example, the sintered body may have a shape of a disc (discotic), a cuboidal shape, or a shape of a dental product (for example, a crown shape).

The methods of production of the zirconia composition, granules, powders, molded bodies, pre-sintered bodies, machined workpieces, and sintered bodies described in the present specification are not limited those described above, and a variety of known methods are applicable, as long as the desired features and effects of the present invention are obtained.

A zirconia pre-sintered body of the present invention can be suitably used for zirconia worked products (for example, such as dental materials, optical fiber cable connectors, and the casing of smartphones), which require strength or aesthetics, or both, after firing. Examples of the dental materials include dental prostheses such as crowns and inlays.

The present invention encompasses embodiments combining the foregoing features, provided that the present invention can exhibit its effects with such combinations made in various forms within the technical idea of the present invention.

EXAMPLES

The following describes the present invention in greater detail by way of Examples. The present invention, however, is in no way limited by the following descriptions.

Evaluation of Hard Sensation with Fingers

The pre-sintered body obtained in each Example and Comparative Example was machined into a crown shape with a CAD/CAM system. The machined workpiece, which is an integral part of the pre-sintered body with the pillar (cylindrical in shape with a diameter of 5 mm) forming a part of the pre-sintered body, was evaluated using the criteria below after milling the pillar portion with an ULTIMATE 500 (manufactured by Nakanishi Inc.) installed with a diamond point HP, form number 25 (manufactured by Shofu Inc.). For evaluation, the pillar portion was visually observed while being milled with the diamond point HP held perpendicular to the column direction of the pillar under about 500 g load at 10,000 rpm in the air (n = 10). Samples were determined as meeting any of the following criteria when at least eight out of ten samples were evaluated to fall within the same category. The samples were determined as having passed the test when the evaluation result was Good.

Evaluation criteria

Good: Milling removed 90% or more of the pillar in 10 seconds
Fail (too hard): Milling failed to remove the pillar in 10 seconds
Fail (too soft): The pillar broke before 90% or more of the pillar was removed by 10 seconds of milling

Measurement of Chipping Rate

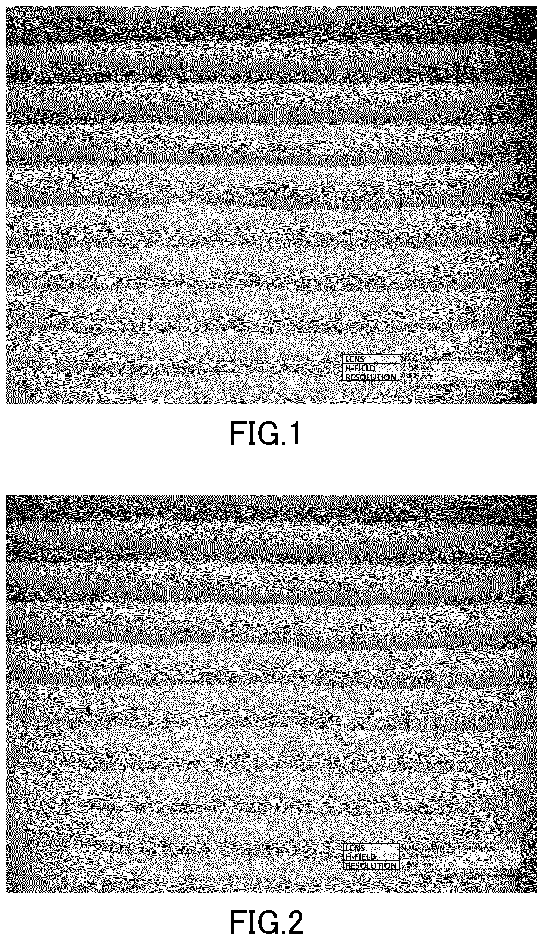

The pre-sintered body obtained in each Example and Comparative Example was worked into a shape of a front tooth frame with an diamond-coated end mill using a milling machine DWX-52DC (manufactured by Kuraray Noritake Dental Inc.), based on three-dimensional NC data. The pre-sintered body was milled in contour patterns with a spindle rotational speed of 30,000 rpm at a feed rate of 2,000 mm/min and 0.5 mm pitch Z. An image on the labial side of the front tooth obtained was captured with a light microscope at a central portion of the tooth surface, and was painted black in the chipped area, leaving the remaining portion white (the image was binalized). The chipping rate was represented as a percentage of the black area in the total black and white area. An Image-Pro Plus manufactured by Hakuto Co., Ltd. was used for area measurement. The results were evaluated using the following criteria (n = 4). FIG. 1 shows a captured light microscope image of a machined workpiece surface with 1% chipping rate according to Example 3. FIG. 2 shows a captured light microscope image of a machined workpiece surface with 10% chipping rate according to Comparative Example 1. Samples were evaluated as having passed the test when the evaluation result was moderate or higher.

Evaluation criteria

Outstanding: 1% or Less
Excellent: More than 1% and 3% or less
Good: More than 3% and 5% or less
Moderate: More than 5% and 7% or less
Poor : More than 7%

Measurement of Vickers Hardness

The pre-sintered body obtained in each Example and Comparative Example was used for measurements in compliance with JIS Z 2244:2009. The pre-sintered body was held under 5 kgf load for 30 seconds with the Falcon 500 manufactured by Innovatest, and the Hv value was calculated (mean value for n = 10).

Density Measurement

The dimensions of a cuboidal pre-sintered body measuring about 20 mm in length $\times$ 19 mm in width $\times$ 17 mm in height obtained by using the methods of Examples and Comparative Examples were accurately measured with a micrometer, and the density was calculated as a ratio of the mass of the pre-sintered body to the volume of the pre-sintered body, after measuring the mass with a precision balance (mean value for n = 3).

Measurement of Average Particle Diameter

The pre-sintered body obtained in each Example and Comparative Example was used to obtain a surface image, using a scanning electron microscope (manufactured by Keyence under the trade name VE-9800). The acquired image was analyzed to calculate the average particle diameter. For the measurement of particle diameter, the captured SEM image was binalized with the Image-Pro Plus manufactured by Hakuto Co., Ltd., and particles were recognized from the field (region) by adjusting the brightness range to provide clear grain boundaries. In areas with unclear grain boundaries, a reduce filter was applied to the region until each region reduced to a single or multiple points, and Voronoi polygons were created by using these points as generators of Voronoi polygons. Lines were drawn that connect the midpoints between two adjacent generators, and these lines were superimposed on the original particle image to separate adjacent particles. For example, in the case where image processing produced a particle that looks like a gourd, the particle was separated into two by assuming that two adjoining circular particles appear to be a single particle. In a processing file recognizing primary particle diameter, "Diameter" was selected from "Count/size dialog" to find the distribution (n = 4). Specifically, a mean value of average particle diameters (primary particle diameters) measured in each field with Image-Pro Plus software was determined for four fields from one sample.

Measurement of Percentage Presence of Stabilizer

The pre-sintered body obtained in each Example and Comparative Example was used to measure an XRD pattern, using a fully automatic multipurpose X-ray diffractometer (manufactured by Rigaku Corporation under the trade name SmartLab Studio II). Sampling was made every 0.01 degree at 4 degree/min and a tube voltage of 40 kV-30 mA with $2\theta/\theta$ scan axis. A high-resolution high-speed one-dimensional X-ray detector (trade name D/teX Ultra 250) was used as detector. From the XRD pattern, $f_y$ in formula (1) was determined (mean value for n = 3). The preferred range of $f_y$ satisfies formula (2), as noted above. The evaluation criteria are shown in Table 1.

Evaluation criteria

[Table 1]

| Yttria content | Percentage presence $f_y$ of undissolved yttria | | | |
|---|---|---|---|---|
| [mol%] | Outstanding | Excellent | Good | Poor |
| 3.0 | 3.3% or More | 2.4% or More | 1.5% or More | Less than 1.5% |
| 4.0 | 5.1% or More | 4.1% or More | 3.2% or More | Less than 3.2% |
| 4.5 | 6.1% or More | 5.1% or More | 4.0% or More | Less than 4.0% |
| 4.7 | 6.4% or More | 5.4% or More | 4.3% or More | Less than 4.3% |
| 5.0 | 6.9% or More | 5.9% or More | 4.9% or More | Less than 4.9% |
| 5.3 | 7.5% or More | 6.5% or More | 5.4% or More | Less than 5.4% |
| 6.0 | 8.7% or More | 7.7% or More | 6.6% or More | Less than 6.6% |
| 8.0 | 12.2% or More | 11.1% or More | 10.0% or More | Less than 10.0% |

Measurement of Three-Point Flexural Strength

The pre-sintered body obtained in each Example and Comparative Example was measured in compliance with ISO 6872:2015, using a specimen measuring 5 mm $\times$ 10 mm $\times$ 50 mm in size. For surface finishing, the specimen surfaces, including the chamfered surface (see ISO 6872:2015, 7.3.1.2.1) were finished longitudinally with #600 sandpaper. The specimen was disposed in such an orientation that its widest face is perpendicular to the vertical direction (loading direction), and the three-point flexural strength was measured at a span (a distance between supports) of 30 mm with a crosshead speed of 0.5 mm/min, using a universal testing machine (AG-I 100kN, manufactured by Shimadzu Corporation) (mean value for n = 3).

Measurement of IUPAC Classification

A fully automatic gas adsorption measurement apparatus AS1-MP manufactured by Anton Paar was used for the measurement of IUPAC classification under the following conditions (n = 2). Whether a specimen falls into what category of IUPAC classification was confirmed from the shape of adsorption-desorption isotherm in two specimens, based on the IUPAC classification of adsorption-desorption isotherms. For example, a specimen was determined as type IV when two specimens both classified as type IV.

All specimens were type III except for Comparative Examples 3 and 4, which classified as type IV of IUPAC classification.

Specimen: Particles that passed through a sieve with a nominal opening (JIS Z8801-1:2019) of 63 $\mu$m after the zirconia pre-sintered body was pulverized with a mortar.
Deaeration conditions: Specimen was placed in a measurement cell, and deaerated at 200°C (in a vacuum) for 2 days.
Cell size: 1.5 cm$^3$ (outside diameter of stem: 6 mm)

Adsorbate gas: Nitrogen
Measurement item: Adsorption/desorption isotherm at arbitrarily chosen measurement points (a total of 130 points)
Items analyzed: Multi-point BET specific surface area, total pore volume, average pore diameter, BJH pore diameter distribution (mesopore region), NLDFT pore size distribution (micropore to mesopore region)

Examples 1 to 11 and Comparative Examples 1, 2, and 5 to 7

A zirconia raw material (zirconium oxide) and a yttria raw material (yttrium oxide), separately prepared in advance, were weighed so as to give the yttria content shown in Table 2 (yttria content relative to the total mole of zirconia and stabilizer). After being introduced into water, these materials were placed in a rotary container with zirconia beads, and were mixed by being pulverized with a ball mill until the desired primary particle diameter (about 100 nm) was reached. The primary particle diameter was measured by volume with ultrasonic waves applied after a slurry diluted with water was subjected to 30 minutes of ultrasonication, using a laser diffraction/scattering particle size distribution analyzer (manufactured by Horiba Ltd. under the trade name Partica LA-950). The desired slurry was obtained after about 20 hours of working with a ball mill. An organic binder was added to the slurry, except for Comparative Example 5. An aqueous acrylic binder was used as organic binder. The organic binder was added to the slurry in the amount shown in Table 2, and the mixture was stirred for 24 hours with rotary vanes. After being stirred, the slurry was granulated dry to obtain granules, using a spray dryer. The granules had an average particle diameter of 40 μm. A powder of these granules was flown into a cylindrical die, and a zirconia molded body was obtained after uniaxial pressing at 30 MPa and subsequent CIP processing at 170 MPa. The zirconia molded body was placed in an electric furnace, and heated from room temperature at 10°C/min. After being retained at 500°C for 2 hours to debind the organic components, the zirconia molded body was held for 2 hours at the pre-sintering temperature shown in Table 2, and was gradually cooled at -0.4°C/min to obtain a zirconia pre-sintered body.

Comparative Examples 3 and 4

A mixture of hydrous zirconia and hydrous yttria was obtained by mixing zirconium oxychloride and yttrium chloride so as to give the contents shown in Table 2 (contents in terms of an oxide). The mixture was then fired at 800°C to obtain a stabilized zirconia powder dissolving yttria as a solid solution.
The average particle diameter was 40 nm after a ball mill process performed in the same manner as in Example 1. After adding an organic binder to the slurry, a molded body and a pre-sintered body were obtained by following the procedure of Example 1.

Comparative Examples 8 and 9

The desired slurry was obtained after about 20 hours of working with a ball mill performed in the same manner as in Example 1, following Table 2. A powder after drying of the slurry with a spray dryer was fired at the temperature shown in Table 2, without adding an organic binder. After adding water and an organic binder to the powder in amounts two times the mass of the powder, the raw materials were mixed by being pulverized with a ball mill until the desired primary particle diameter (about 100 nm) was reached. The primary particle diameter was measured by volume with ultrasonic waves applied after a slurry diluted with water was subjected to 30 minutes of ultrasonication, using a laser diffraction/scattering particle size distribution analyzer (manufactured by Horiba Ltd. under the trade name Partica LA-950). The desired slurry was obtained after about 20 hours of working with a ball mill. An aqueous acrylic binder was used as organic binder. The slurry was then granulated dry to obtain granules, using a spray dryer. The granules had an average particle diameter of 40 μm. A powder of these granules was flown into a cylindrical die, and a molded body was obtained after uniaxial pressing performed at 30 MPa while shaking the die, and subsequent CIP processing at 170 MPa. The molded body was placed in an electric furnace, and heated from room temperature at 10°C/min. After being retained at 500°C for 2 hours to debind the organic components, the molded body was held for 2 hours at the secondary pre-sintering temperature shown in Table 2, and was gradually cooled at -0.4°C/min to obtain a pre-sintered body.
The results for Examples and Comparative Examples are presented in Table 2.

[Table 2]

| | Zirconia composition | | | Vickers hardness [HV 5/30] | Zirconia pre-sintered body | | | | | | | | Machinability of zirconia pre-sintered body | | |
| | Yttria content [mol%] | Binder content [mass%] | Firing [°C] | | Density [g/cm³] | Average particle diameter [nm] | Percentage presence of undissolved yttria $f_y$ (%) | Evaluation | Three-point flexural strength [MPa] | IUPAC classification | Pre-sintering temperature [°C] | Hard sensation with fingers | Chipping Judgment | Frequency |
|---|---|---|---|---|---|---|---|---|---|---|---|---|---|---|
| Ex. 1 | 4.0 | 2.0 | None | 69 | 3.3 | 110 | 4.4 | Excellent | 20 | III | 895 | Good | Excellent | 3% |
| Ex. 2 | 4.0 | 2.0 | None | 130 | 3.3 | 130 | 3.4 | Good | 55 | III | 1,050 | Good | Excellent | 2% |
| Ex. 3 | 4.5 | 2.0 | None | 91 | 3.3 | 110 | 6.1 | Outstanding | 25 | III | 1,000 | Good | Outstanding | 1% |
| Ex. 4 | 4.7 | 2.0 | None | 90 | 3.3 | 110 | 6.5 | Outstanding | 24 | III | 1,000 | Good | Outstanding | 1% |
| Ex. 5 | 5.0 | 2.0 | None | 97 | 3.3 | 110 | 6.8 | Excellent | 28 | III | 1,000 | Good | Excellent | 2% |
| Ex. 6 | 5.3 | 2.0 | None | 96 | 3.3 | 110 | 7.0 | Excellent | 30 | III | 1,000 | Good | Excellent | 3% |
| Ex. 7 | 6.0 | 2.0 | None | 87 | 3.2 | 110 | 7.1 | Good | 25 | III | 925 | Good | Good | 5% |
| Ex. 8 | 6.0 | 2.0 | None | 97 | 3.2 | 110 | 6.7 | Good | 36 | III | 1,000 | Good | Good | 4% |
| Ex. 9 | 8.0 | 2.0 | None | 110 | 2.7 | 130 | 10.0 | Good | 31 | III | 1,050 | Good | Moderate | 7% |
| Ex. 10 | 4.0 | 1.5 | None | 125 | 3.4 | 95 | 4.2 | Excellent | 45 | III | 950 | Good | Excellent | 3% |
| Ex. 11 | 4.0 | 2.5 | None | 78 | 3.1 | 120 | 5.2 | Outstanding | 36 | III | 850 | Good | Good | 5% |
| Com. Ex. 1 | 4.0 | 2.0 | None | 49 | 3.3 | 110 | 5.8 | Outstanding | 14 | III | 825 | Fail (too soft) | Poor | 10% |
| Com. Ex. 2 | 4.0 | 2.0 | None | 210 | 4.1 | 130 | 3.0 | Poor | 75 | III | 1,100 | Fail (too hard) | Excellent | 2% |
| Com. Ex. 3 | 5.6 | 2.0 | None | 53 | 3.2 | 38 | 0.1 | Poor (solid solution) | 22 | IV | 1,000 | Good | Poor | 10% |
| Com. Ex. 4 | 5.6 | 2.0 | None | 73 | 3.4 | 38 | 0.1 | Poor (solid solution) | 31 | IV | 1,100 | Good | Poor | 10% |
| Com. Ex. 5 | 4.0 | 0.0 | None | 48 | 2.6 | 110 | 3.4 | Good | 14 | III | 1,000 | Fail (too soft) | Poor | 10% |
| Com. Ex. 6 | 4.0 | 1.0 | None | 138 | 4.1 | 120 | 3.3 | Good | 75 | III | 1,000 | Fail (too hard) | Excellent | 2% |

| | Zirconia composition | | | Zirconia pre-sintered body | | | | | | | | Machinability of zirconia pre-sintered body | | |
|---|---|---|---|---|---|---|---|---|---|---|---|---|---|---|
| | Yttria content [mol%] | Binder content [mass%] | Firing [°C] | Vickers hardness [HV 5/30] | Density [g/cm$^3$] | Average particle diameter [nm] | Percentage presence of undissolved yttria | | Three-point flexural strength [MPa] | IUPAC classi-fication | Pre-sinter-ing tempera-ture [°C] | Hard sen-sation with fingers | Chipping | |
| | | | | | | | $f_y$ (%) | Evaluation | | | | | Judgment | Frequency |
| Com. Ex. 7 | 4.0 | 3.0 | None | 63 | 2.8 | 155 | 4.1 | Excellent | 14 | III | 895 | Good | Poor | 10% |
| Com. Ex. 8 | 3.0 | 2.0 | 1,000 | 138 | 3.1 | 120 | 1.9 | Good | 32 | III | 950 | Good | Poor | 10% |
| Com. Ex. 9 | 8.0 | 2.0 | 1,000 | 138 | 3.1 | 120 | 6.6 | Poor | 27 | III | 950 | Good | Poor | 10% |

The zirconia pre-sintered bodies of Examples 1 to 11 containing specific amounts of yttria as stabilizer, and in which at least a part of yttria is not dissolved in zirconia as a solid solution, and the Vickers hardness fell within the specific range were found to be desirable in terms of hard sensation with fingers and chipping rate, and had excellent machinability. The chipping rate was poor, or hard sensation with fingers was unsatisfactory in Comparative Examples 1 to 3 and 5 to 9 in which the Vickers hardness was inadequate, and in Comparative Examples 3 and 4 in which the stabilizer dissolved as a solid solution. The chipping rate was particularly poor in Comparative Example 4 because of dissolution of the stabilizer, despite that the Vickers hardness was in the range of the present invention.

INDUSTRIAL APPLICABILITY

A zirconia pre-sintered body of the present invention can be suitably used for zirconia worked products (for example, such as dental materials, optical fiber cable connectors, and the casing of smartphones).

Reference Signs List

1   Zirconia pre-sintered body
2   Machined workpiece
3   Pillar

**Claims**

1.  A zirconia pre-sintered body comprising zirconia, and a stabilizer capable of reducing a phase transformation of zirconia,

    the content of the stabilizer being 3 to 8 mol% relative to the total mole of the zirconia and the stabilizer,
    at least a part of the stabilizer being not dissolved in zirconia as a solid solution, and
    the zirconia pre-sintered body having a Vickers hardness of 65 to 135HV 5/30 as measured in compliance with JIS Z 2244:2009.

2.  The zirconia pre-sintered body according to claim 1, wherein the stabilizer is yttria.

3.  The zirconia pre-sintered body according to claim 2, wherein the percentage presence $f_y$ of yttria not dissolved in zirconia as a solid solution calculated from the following formula (1) falls within the range represented by formula (2), [Math. 1]

$$f_y(\%) = \frac{I_y(111)}{I_y(111) + I_m(111) + I_m(11-1) + I_t(111) + I_c(111)} \times 100 \tag{1}$$

$$f_y \geq 1.7 \times (\text{yttria content}) - 3.6 \tag{2},$$

    wherein $I_y(111)$ represents the peak intensity of the (111) plane of yttria near $2\theta = 29°$ in an X-ray diffraction pattern by CuKα radiation, $I_m(111)$ and $I_m(11-1)$ represent the peak intensities of the (111) plane and (11-1) plane, respectively, of the monoclinic crystal system of zirconia in the X-ray diffraction pattern, $I_t(111)$ represents the peak intensity of the (111) plane of the tetragonal crystal system of zirconia in the X-ray diffraction pattern, and $I_c(111)$ represents the peak intensity of the (111) plane of the cubic crystal system of zirconia in the X-ray diffraction pattern, and the yttria content represents the mole percentage of yttria relative to the total mole of zirconia and yttria.

4.  The zirconia pre-sintered body according to any one of claims 1 to 3, wherein the zirconia pre-sintered body shows a nitrogen adsorption and/or desorption of isotherm type III according to IUPAC classification.

5.  The zirconia pre-sintered body according to any one of claims 1 to 4, which has a density of 2.7 $g/cm^3$ to 4 $g/cm^3$.

6. The zirconia pre-sintered body according to any one of claims 1 to 5, which comprises an adhesion of particles containing zirconia and a stabilizer, and the particles have an average particle diameter of 40 nm to 150 nm.

7. The zirconia pre-sintered body according to any one of claims 1 to 6, wherein the content of the stabilizer is 3.2 to 6.5 mol% relative to the total mole of the zirconia and the stabilizer.

8. The zirconia pre-sintered body according to any one of claims 1 to 7, which has a three-point flexural strength of 15 to 70 MPa as measured in compliance with JIS R 1601:2008.

9. The zirconia pre-sintered body according to any one of claims 1 to 8, which has a frequency of chipping of 9% or less after milling.

10. A dental material comprising a zirconia pre-sintered body of any one of claims 1 to 9.

11. A method for producing a zirconia pre-sintered body, comprising the steps of:

producing a zirconia composition containing zirconia particles and particles of a stabilizer capable of reducing a phase transformation of zirconia, and in which the content of the stabilizer is 3 to 8 mol% relative to the total mole of the zirconia and the stabilizer; and
firing the zirconia composition to obtain a zirconia pre-sintered body having a Vickers hardness of 65 to 135HV 5/30 in compliance with JIS Z 2244:2009,
the zirconia composition producing step comprising the step of preparing a mixture by mixing the zirconia powder and the stabilizer; and the step of obtaining a zirconia granule by introducing a binder to the mixture and granulating the mixture,
the zirconia composition producing step comprising essentially no firing step.

12. The method for producing a zirconia pre-sintered body according to claim 11, wherein the content of the binder is 1.2 to 2.8 mass% in the whole zirconia composition.

13. The method for producing a zirconia pre-sintered body according to claim 11 or 12, wherein the zirconia in the zirconia composition is predominantly monoclinic in crystal system.

14. The method for producing a zirconia pre-sintered body according to claim 13, wherein the monoclinic fraction in the crystal system of zirconia is 55% or more.

15. The method for producing a zirconia pre-sintered body according to any one of claims 11 to 14, further comprising the step of press forming the zirconia granule into a zirconia molded body,

the press forming applying a surface pressure of 30 to 200 MPa in preparing the zirconia molded body, and
the zirconia pre-sintered body having a density of 2.7 $g/cm^3$ to 4 $g/cm^3$.

16. The method for producing a zirconia pre-sintered body according to claim 15, which comprises the step of pre-sintering the zirconia molded body at 830 to 1,080°C.

FIG.1

FIG.2

FIG.3

FIG.4

# EP 4 223 723 A1

<table>
<tr><td colspan="2"><strong>INTERNATIONAL SEARCH REPORT</strong></td><td>International application No.<br><br><strong>PCT/JP2021/035718</strong></td></tr>
</table>

**A. CLASSIFICATION OF SUBJECT MATTER**

*C04B 35/486*(2006.01)i; *A61C 5/70*(2017.01)i; *A61C 13/083*(2006.01)i
FI: C04B35/486; A61C5/70; A61C13/083

According to International Patent Classification (IPC) or to both national classification and IPC

**B. FIELDS SEARCHED**

Minimum documentation searched (classification system followed by classification symbols)

C04B35/486; A61C5/70; A61C13/083

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-33338 A (SHOFU INC) 05 March 2020 (2020-03-05)<br>    paragraphs [0001], [0099], [0119]-[0133] | 1-4, 7-10 |
| X | WO 2020/138316 A1 (KURARAY NORITAKE DENTAL INC) 02 July 2020 (2020-07-02)<br>    paragraphs [0015], [0025]-[0030], [0036], [0053]-[0057], [0061] | 1-10 |
| A | | 11-16 |
| A | WO 2018/056331 A1 (KURARAY NORITAKE DENTAL INC) 29 March 2018 (2018-03-29)<br>    paragraphs [0076], [0086]-[0094], [0105]-[0120], [0141]-[0169] | 1-16 |

☐ Further documents are listed in the continuation of Box C.       ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

22

**INTERNATIONAL SEARCH REPORT**
**Information on patent family members**

International application No.

**PCT/JP2021/035718**

| Patent document cited in search report | | | Publication date (day/month/year) | Patent family member(s) | Publication date (day/month/year) |
|---|---|---|---|---|---|
| JP | 2020-33338 | A | 05 March 2020 | US 2020/0170753 A1 paragraphs [0002], [0102], [0122]-[0136] EP 3636621 A2 CN 110893123 A KR 10-2020-0022348 A | |
| WO | 2020/138316 | A1 | 02 July 2020 | (Family: none) | |
| WO | 2018/056331 | A1 | 29 March 2018 | US 2019/0231651 A1 paragraphs [0079], [0089]-[0097], [0108]-[0123], [0144]-[0153] EP 3517503 A1 CN 109790047 A KR 10-2019-0047702 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015528730 T

- WO 2018056330 A